# EUROPÄISCHE PATENTSCHRIFT

(11) **EP 3 880 986 B1**
(45) Veröffentlichungstag und Bekanntmachung des Hinweises auf die Patenterteilung: **02.11.2022**
(21) Anmeldenummer: 19813411.6
(22) Anmeldetag: 12.11.2019
(51) Int. Cl.: F16F 15/26, F02B 75/06

(54) **AUSGLEICHSWELLE**
BALANCE SHAFT
ARBRE D'ÉQUILIBRAGE

(30) Priorität: 16.11.2018 DE 102018128830; 18.01.2019 DE 102019101319
(43) Veröffentlichungstag der Anmeldung: 22.09.2021
(73) Patentinhaber: Schaeffler Technologies AG & Co. KG, 91074 Herzogenaurach (DE)
(72) Erfinder: SCHREYER, Hannes, 91466 Gerhardshofen (DE); DORN, Stefan, 96142 Hollfeld (DE)
(86) Internationale Anmeldenummer: PCT/DE2019/100971
(87) Internationale Veröffentlichungsnummer: WO 2020/098879

(56) Entgegenhaltungen:
- DE-A1- 19 926 406
- DE-A1-102008 018 545
- DE-U1-202013 100 896

## Beschreibung

Die Erfindung betrifft eine Ausgleichswelle zum Ausgleich von Massenkräften und/oder Massenmomenten einer Hubkolben-Brennkraftmaschine. Es handelt sich um eine gebaute Ausführung, die folgende Komponenten umfasst:
- eine Unwuchtwelle mit einem Lagerzapfen, dessen Umfang lediglich teilzylindrisch ist, wobei der zylindrische Teilumfang des Lagerzapfens zur Wellenunwucht hin ausgerichtet ist,
- einen Nadelkranz
- und einen den Lagerzapfen umschließenden Lagerring, der am zylindrischen Teilumfang anliegt und die Innenlaufbahn des Nadelkranzes bildet.

Eine gattungsgemäße Ausgleichswelle ist aus der DE 10 2008 018 545 A1 bekannt. Weitere gebaute Ausgleichswellen mit teilzylindrischem Lagerzapfen, Lagerring und darauf abwälzendem Wälzlager sind beispielsweise aus der EP 2 459 899 B1, der EP 2 426 374 B1 und der DE 10 2016 210 480 A1 bekannt.

Der vorliegenden Erfindung liegt die Aufgabe zugrunde, eine gebaute Ausgleichswelle der eingangs genannten Art mit einer konstruktiv verbesserten Lagerstelle anzugeben.

Diese Aufgabe wird dadurch gelöst, dass der Käfig des Nadelkranzes mit sich radial einwärts erstreckenden Vorsprüngen an den Stirnseiten des Lagerrings axial beidseitig anläuft. Die beidseitige Axialführung des Käfigs erfolgt damit unmittelbar am Lagerring, so dass die axiale Position der Nadeln relativ zu deren Innenlaufbahn auf dem Lagerring nur innerhalb der dafür maßgeblichen Bauteiltoleranzen des Käfigs, der Nadeln und des Lagerrings und folglich in nur geringem Maße streut. Denn das vergleichsweise große Gesamtmaß diesbezüglicher Bauteiltoleranzketten, die sich wie im Stand der Technik etwa vom Lagerring über den Lagerzapfen und daran angrenzende Wellenabschnitte zum Nadelkranz erstrecken, hat erfindungsgemäß keinen Einfluss auf die Axialposition der Nadeln auf dem Lagerring.

Vorteilhafte Ausgestaltungen der Erfindung sind Gegenstand der Unteransprüche. Ein Ausführungsbeispiel einer erfindungsgemäßen Ausgleichswelle ist in der nachfolgenden Beschreibung erläutert und in den Figuren illustriert. Es zeigen:
- Figur 1:: die Ausgleichswelle in perspektivischem Zusammenbau;
- Figur 2:: die Unwuchtwelle gemäß Figur 1 als Einzelteil;
- Figur 3:: eine der Lagerstellen gemäß Figur 1 in vergrößertem Längsschnitt;
- Figur 4:: den Lagerring gemäß Figur 3 als perspektivisches Einzelteil;
- Figur 5:: den Nadelkranz gemäß Figur 3 als perspektivisches Einzelteil;
- Figur 6:: das Spannelement gemäß Figur 3 als perspektivisches Einzelteil;
- Figur 7:: eine schematische Darstellung des Axialanlaufs des Nadelkranzes am Lager-ring.

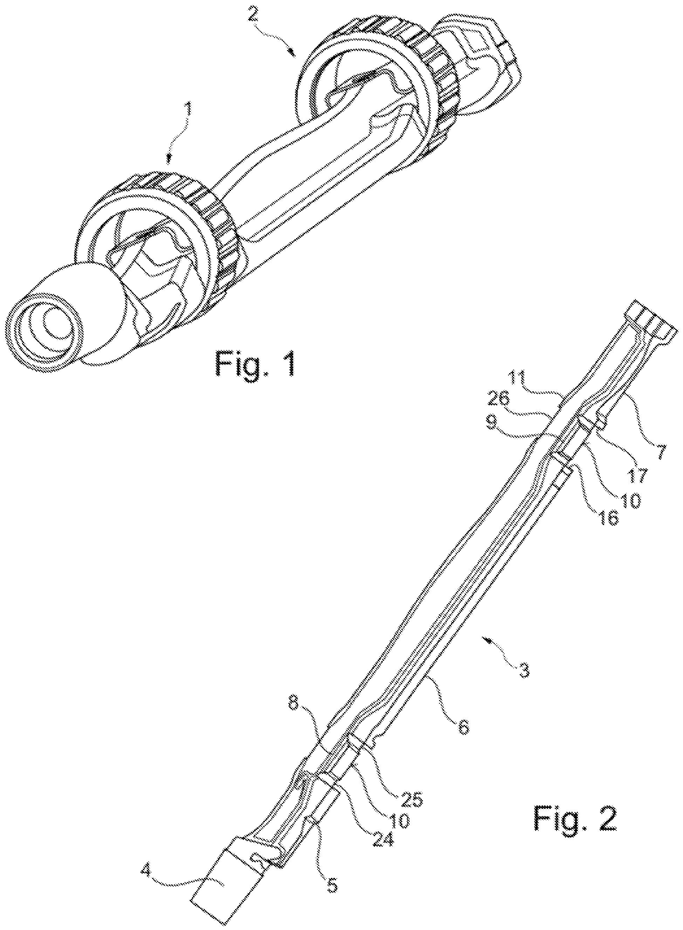

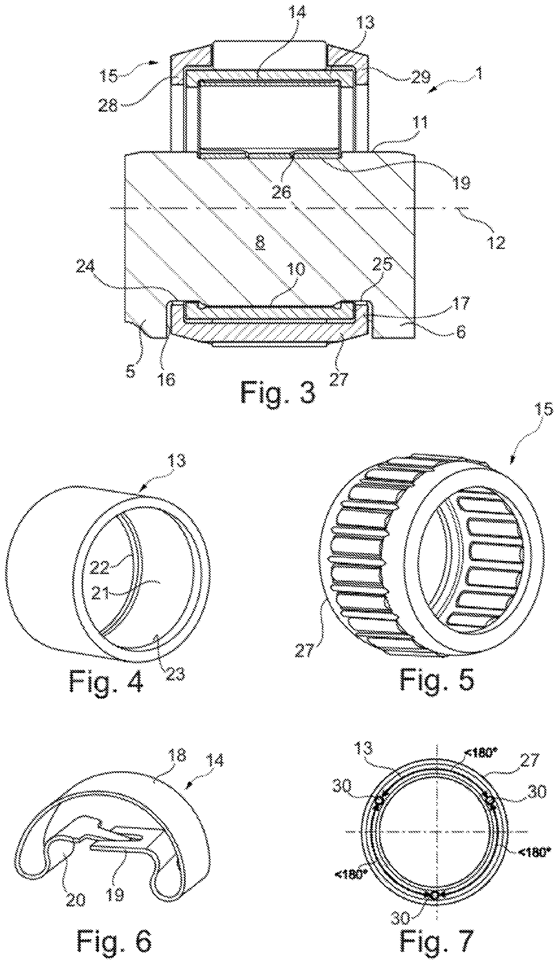

Die Figuren 1 bis 6 zeigen Komponenten und den Zusammenbau einer erfindungsgemäßen Ausgleichswelle, die an zwei Lagerstellen 1 und 2 in einem Gehäuse einer Brennkraftmaschine radial nadelgelagert ist. Die Ausgleichswelle umfasst eine als Guss- oder Schmiedeteil hergestellte Unwuchtwelle 3 mit einem endseitigen Antriebszapfen 4 für ein darauf zu montierendes Antriebsrad (nicht dargestellt) und Unwuchtabschnitten 5, 6 und 7 sowie daran angrenzenden Lagerzapfen 8 und 9, die jeweils zwei der Unwuchtabschnitte 5 bis 7 im axialen Bereich der Lagerstellen 1, 2 verbinden. Der Umfang der Lagerzapfen 8, 9 ist lediglich teilzylindrisch, wobei zwecks Maximierung der Wellenunwucht der zylindrische Teilumfang 10 umfänglich jeweils so zur Wellenunwucht hin ausgerichtet ist, dass die Unwucht der Unwuchtabschnitte 5 bis 7 und die Unwucht der Lagerzapfen 8, 9 im Wesentlichen parallel und gleichgerichtet sind und jeden zylindrischen Teilumfang 10 im Wesentlichen umfangsmittig belasten. Der dem zylindrischen Teilumfang 10 radial gegenüberliegende (nichtzylindrische) Teilumfang des Lagerzapfens 8, 9, nachfolgend als Lagerzapfenrücken 11 bezeichnet, ist gegenüber dem auf die Wellendrehachse 12 bezogenen Umlaufkreis des zylindrischen Teilumfangs 10 freigenommen, s. Figur 3.

Jede Lagerstelle 1, 2 umfasst den Lagerzapfen 8 bzw. 9 und einen diesen umschließenden Lagerring 13, ein Spannelement 14 sowie einen Nadelkranz 15, dessen Innenlaufbahn durch den Lagerring 13 gebildet ist. Die Befestigung jedes Lagerrings 13 an der Unwuchtwelle 3 erfolgt mittels des Spannelements 14, das den Lagerring 13 radial und axial mit dem Lagerzapfen 8 bzw. 9 verbindet. Das Spannelement 14 ist zu diesem Zweck sowohl mit der Unwuchtwelle 3 als auch mit dem Lagerring 13 axial formschlüssig verbunden.

Der Umlaufkreis des zylindrischen Teilumfangs 10 ist jeweils kleiner als der Umlaufkreis der dazu benachbarten Unwuchtabschnitte 5 und 6 bzw. 6 und 7, wobei sowohl der zylindrische Teilumfang 10 als auch die Innenlaufbahn des Lagerrings 13 gegenüber Axialschultern 16 und 17 der Unwuchtabschnitte 5 bis 7 radial zurückspringen. Die Breite der Lagerringe 13 ist kleiner als der gegenseitige Abstand der Axialschultern 16, 17, die sich umfänglich nur partiell und im Wesentlichen symmetrisch zu der unwuchtbedingt mit Punktlast beaufschlagten Lastzone auf dem zylindrischen Teilumfang 10 und dem daran anliegenden Lagerring 13 erstrecken. Der Umfangswinkel der Axialschultern 16, 17 ist vorliegend deutlich kleiner als 180°. Jeder Lagerring 13 ist zwischen den Axialschultern 16, 17 mit beidseitig etwa gleichem Abstand befestigt, s. Figur 3. Die Montage der Lagerringe 13 erfolgt durch Auffädeln auf die Unwuchtwelle 3, anschließendes Positionieren und Befestigen auf den Lagerzapfen 8 bzw. 9.

Die Spannelement 14 ist eine Metallklammer, die aus federhartem Flachmaterial besteht und unter elastischer Verformung in dem Freiraum zwischen dem Lagerzapfenrücken 11 und dem Lagerring 13 radial eingespannt ist. Das Spannelement 14 umfasst hierzu einen im Wesentlichen teilzylindrischen Abschnitt 18, dessen Enden in zwei sich auf dem Lagerzapfenrücken 11 abstützende Schenkel 19 und 20 übergehen. Der Abschnitt 18 schmiegt sich an die Innenmantelfläche 21 des Lagerrings 13 an, und die Schenkel 19, 20 umgreifen sich zwecks gegenseitiger Verriegelung in axialer Richtung. Das Spannelement 14 kann alternativ aus Kunststoff bestehen.

Der radiale Fügeverband des Lagerrings 13 mit dem Lagerzapfen 8 bzw. 9 erfolgt durch die radiale Einspannkraft des Spannelements 14, das den Lagerring 13 in die zur Wellenunwucht entgegen gesetzte Richtung beaufschlagt und folglich radial gegen und in haftender Anlage an den zylindrischen Teilumfang 10 spannt. Der axiale Fügeverband des Lagerrings 13 mit dem Lagerzapfen 8 bzw. 9 erfolgt durch axialen Formschluss des Lagerrings 13 mit dem Spannelement 14 einerseits und des Spannelements 14 mit dem Lagerzapfen 8 bzw. 9 andererseits.

Der Formschluss zwischen dem Lagerring 13 und dem Spannelement 14 ist durch vollumfängliche Borde 22 und 23 gebildet, die sich an den axialen Enden des Lagerrings 13 gegenüber dessen Innenmantelfläche 21 radial einwärts erstrecken und den teilzylindrischen Abschnitt 18 des Spannelements 14 axial praktisch spielfrei einfassen.

Der Formschluss zwischen dem Spannelement 14 und dem Lagerzapfen 8 bzw. 9 ist dadurch gebildet, dass der Lagerzapfenrücken 11 eine Nut 26 mit quer zur Wellendrehachse 12 verlaufenden Nutwänden hat, die den Schenkel 19 axial praktisch spielfrei einfassen.

Damit ist die axiale Formschlussverbindung des Lagerrings 13 mit dem Lagerzapfen 8 bzw. 9 auf die axial innere Führung der Borde 22, 23 an den axialen Stirnseiten des teilzylindrischen Abschnitts 18 am Spannelement 14 einerseits und auf die axial äußere Führung des Spannelements 14 an den Nutwänden der Nut 26 andererseits beschränkt. Unter dem Begriff 'axial praktisch spielfrei' ist entweder eine axial spielfreie Einfassung oder eine axial spielbehaftete Einfassung zu verstehen, deren Axialspiel maximal so bemessen ist, dass ein Axialanlauf der Borde 22, 23 unmittelbar an der Unwuchtwelle 3 ausgeschlossen ist.

Der seitens des zylindrischen Teilumfangs 10 erforderliche Freigang des Lagerrings 13 ist durch Freistiche 24 und 25 hergestellt, die die Axialschultern 16 bzw. 17 mit dem zylindrischen Teilumfang 10 verbinden und in denen die Borde 22, 23 - zumindest axial - berührungslos aufgenommen sind.

Der Nadelkranz 15 hat einen Käfig 27, dessen axiale Enden mit sich radial einwärts erstreckenden Vorsprüngen versehen sind. Bei den Vorsprüngen handelt es sich ebenfalls um vollumfängliche Borde 28 und 29, die die durch die Borde 22 und 23 gebildeten Stirnseiten des Lagerrings 13 axial spielarm umgreifen. Das Axialspiel ist so bemessen, dass der beidseitige Axialanlauf des Käfigs 27 ausschließlich an den Stirnseiten des Lagerrings 13 erfolgt. Der beidseitige Axialanlauf mit vollumfänglicher Führung des Käfigs 27 am Lagerring 13 verringert gegenüber einer alternativen Ausführung, bei der ein Nadelkranz lediglich durch die nur teilumfänglichen Axialschultern 16 und 17 axial geführt ist, das Risiko von abrasivem Käfigverschleiß durch zyklisches An- und Ablaufen an bzw. von den Axialschultern 16, 17.

Wie in Figur 7 schematisch illustriert, ist unter dem Begriff des 'vollumfänglichen Axialanlaufs' zu verstehen, dass der Käfig 27 am Lagerring 13 je Anlaufseite an mindestens drei Kontaktpunkten 30 abgestützt und geführt ist, wobei der größte umfängliche Abstand von zwei benachbarten Kontaktpunkten stets kleiner als 180° ist.

In der praktischen Ausführung kann der vollumfängliche Axialanlauf - wie im vorstehenden Ausführungsbeispiel gezeigt - über den beidseits praktisch vollflächigen Kontakt der Borde 28 mit 22 bzw. 29 mit 23 erfolgen. Alternativ kann einer der Kontaktpartner eine oder mehrere umfängliche Ausnehmungen (zwischen kontaktierenden Anlaufsegmenten) haben, in deren umfänglicher Erstreckung kein axialer Kontakt zum anderen Kontaktpartner besteht, wobei die umfängliche Erstreckung jeweils kleiner als 180° ist.

Der Freigang der Borde 28, 29 gegenüber dem Lagerzapfen 8 bzw. 9 ist ebenfalls durch die Freistiche 24 bzw. 25 gewährleistet. Der Käfig 27 besteht aus Kunststoff und ist - vorliegend ohne Käfigschloss - axial geschlitzt, um ihn bei der Montage auf den Lagerring 13 umfänglich aufweiten zu können.

Die Innenmantelfläche 21 des Lagerrings 13 ist - in Querrichtung auf die Wellendrehachse 12 betrachtet - ballig ausgeführt, und der zylindrische Teilumfang 10 ist ein gerader Teilzylinder. Aufgrund dieser Kontaktgeometrie kann der Lagerring 13 zugunsten einer betrieblich optimal ausgerichteten Innenlaufbahn des Nadelkranzes 15 auf dem zylindrischen Teilumfang 10 geringfügig verkippen.

## Patentansprüche

1. Ausgleichswelle, umfassend:
- eine Unwuchtwelle (3) mit einem Lagerzapfen (8, 9), dessen Umfang lediglich teilzylindrisch ist, wobei der zylindrische Teilumfang (10) des Lagerzapfens (8, 9) zur Wellenunwucht hin ausgerichtet ist,
- einen Nadelkranz (15)
- und einen den Lagerzapfen (8, 9) umschließenden Lagerring (13), der am zylindrischen Teilumfang (10) anliegt und die Innenlaufbahn des Nadelkranzes (15) bildet,
**dadurch gekennzeichnet, dass** der Käfig (27) des Nadelkranzes (15) mit sich radial einwärts erstreckenden Vorsprüngen an den Stirnseiten des Lagerrings (13) axial beidseitig anläuft.

2. Ausgleichswelle nach Anspruch 1, **dadurch gekennzeichnet, dass** der Axialanlauf des Käfigs (27) am Lagerring (13) vollumfänglich ist, wobei der Käfig (27) je Anlaufseite an mindestens drei Kontaktpunkten (30) am Lagerring (13) abgestützt ist und wobei der umfängliche Abstand von zwei benachbarten Kontaktpunkten (30) stets kleiner als 180° ist.

3. Ausgleichswelle nach Anspruch 1 oder 2, **dadurch gekennzeichnet, dass** die Vorsprünge des Käfigs (27) vollumfängliche Borde (28, 29) sind und dass die Stirnseiten des Lagerrings (13) durch vollumfängliche Borde (22, 23) gebildet sind, die sich gegenüber der Innenmantelfläche (21) des Lagerrings (13) radial einwärts erstrecken, wobei der Lagerzapfen (8, 9) axial beidseits des zylindrischen Teilumfangs (10) umfängliche Freistiche (24, 25) hat, in denen die Borde (22, 23) des Lagerrings (5) berührungslos aufgenommen sind.

4. Ausgleichswelle nach einem der vorhergehenden Ansprüche, **dadurch gekennzeichnet, dass** der Lagerzapfen (8, 9) einen Lagerzapfenrücken (11) hat, der dem zylindrischen Teilumfang (10) radial gegenüberliegt und gemeinsam mit dem Lagerring (13) einen Freiraum begrenzt, wobei die Ausgleichswelle ein im Freiraum eingespanntes Spannelement (14) umfasst, das den Lagerring (13) radial gegen den zylindrischen Teilumfang (10) spannt.

5. Ausgleichswelle nach Anspruch 4, **dadurch gekennzeichnet, dass** das Spannelement (14) den Lagerring (13) gegen beidseitiges axiales Verschieben auf dem Lagerzapfen (8, 9) dadurch sichert, dass das Spannelement (14) sowohl mit der Unwuchtwelle (3) als auch mit dem Lagerring (13) axial formschlüssig verbunden ist.

6. Ausgleichswelle nach Anspruch 5, **dadurch gekennzeichnet, dass** der axiale Formschluss zwischen dem Spannelement (14) und der Unwuchtwelle (3) durch eine Nut (26) im Lagerzapfenrücken (11) gebildet ist, deren Nutwände axiale Stirnseiten des Spannelements (14) axial entweder spielarm oder spielfrei einfassen.

7. Ausgleichswelle nach Anspruch 5 oder 6, **dadurch gekennzeichnet, dass** der axiale Formschluss zwischen dem Spannelement (14) und dem Lagerring (13) dadurch gebildet ist, dass die Vorsprünge des Käfigs (27) die axialen Stirnseiten des Spannelements (14) axial entweder spielarm oder spielfrei einfassen.

## Claims

1. A balance shaft, comprising:
- an unbalanced shaft (3) having a bearing journal (8, 9), the periphery of which is merely partially cylindrical, wherein the cylindrical partial periphery (10) of the bearing journal (8, 9) is oriented towards the shaft imbalance,
- a needle roller cage assembly (15)
- and a bearing ring (13) which extends around the bearing journal (8, 9), bears against the cylindrical partial periphery (10) and forms the inner raceway of the needle roller cage assembly (15), **characterised in that** the cage (27) of the needle roller cage assembly (15) runs at the end faces of the bearing ring (13) axially on both sides by means of radially inwardly extending protrusions.

2. The balance shaft according to claim 1, **characterised in that** the axial stop of the cage (27) on the bearing ring (13) is fully circumferential, wherein the cage (27) is supported at at least three contact points (30) on each stop side on the bearing ring (13) and wherein the circumferential distance between two adjacent contact points (30) is always less than 180°.

3. The balance shaft according to claim 1 or 2, **characterised in that** the protrusions of the cage (27) are fully circumferential rims (28, 29) and the end faces of the bearing ring (13) are formed by fully circumferential rims (22, 23), which extend radially inwardly with respect to an inner lateral surface (21) of the bearing ring (13), wherein the bearing journal (8, 9) has circumferential undercuts (24, 25) axially on both sides of the cylindrical partial periphery (10), in which undercuts the rims (22, 23) of the bearing ring (5) are received without contact.

4. The balance shaft according to any one of the preceding claims, **characterised in that** the bearing journal (8, 9) has a bearing journal back (11) which lies radially opposite the cylindrical partial periphery (10) and, together with the bearing ring (13) delimits a free space, wherein the balance shaft comprises a clamping element (14) clamped in the free space, which clamping element clamps the bearing ring (13) radially against the cylindrical partial periphery (10).

5. The balance shaft according to claim 4, **characterised in that** the clamping element (14) secures the bearing ring (13) against axial sliding on both sides on the bearing journal (8, 9) such that the clamping element (14) is connected in an axially interlocking manner both to the unbalanced shaft (3) and to the bearing ring (13).

6. The balance shaft according to claim 5, **characterised in that** the axial interlocking connection between the clamping element (14) and the unbalanced shaft (3) is formed by a groove (26) in the bearing journal back (11), the groove walls of which groove enclose axial end faces of the clamping element (14) with either little play or no play.

7. The balance shaft according to claim 5 or 6, **characterised in that** the axial interlocking connection between the clamping element (14) and the bearing ring (13) is formed such that the protrusions of the cage (27) axially enclose axial end faces of the clamping element (14) with either little play or no play.

## Revendications

1. Arbre d'équilibrage, comprenant :
- un arbre à balourd (3) avec un tourillon (8, 9) dont la périphérie est seulement partiellement cylindrique, la périphérie partielle cylindrique (10) du tourillon (8, 9) étant orientée vers le balourd de l'arbre,
- une cage à aiguilles (15)
- et une bague de palier (13) entourant le tourillon (8, 9), qui s'applique contre la circonférence partielle cylindrique (10) et forme la piste de roulement intérieure de la cage à aiguilles (15), **caractérisé en ce que** la cage (27) de la cage à aiguilles (15) s'applique axialement des deux côtés avec des saillies s'étendant radialement vers l'intérieur sur les faces frontales de la bague de palier (13).

2. Arbre d'équilibrage selon la revendication 1, **caractérisé en ce que** la course axiale de la cage (27) sur la bague de palier (13) est complète, la cage (27) s'appuyant, pour chaque côté de la course, sur au moins trois points de contact (30) sur la bague de palier (13) et la distance périphérique entre deux points de contact (30) voisins étant toujours inférieure à 180°.

3. Arbre d'équilibrage selon la revendication 1 ou 2, **caractérisé en ce que** les saillies de la cage (27) sont des bords (28, 29) sur toute la périphérie et **en ce que** les faces frontales de la bague de palier (13) sont formées par des bords (22, 23) sur toute la périphérie, qui s'étendent radialement vers l'intérieur par rapport à la surface d'enveloppe intérieure (21) de la bague de palier (13), le tourillon (8, 9) ayant axialement de part et d'autre de la circonférence partielle cylindrique (10) des dégagements périphériques (24, 25) dans lesquels les bords (22, 23) de la bague de palier (5) sont logés sans contact.

4. Arbre d'équilibrage selon l'une quelconque des revendications précédentes, **caractérisé en ce que** le tourillon (8, 9) a un dos de tourillon (11) qui est radialement opposé à la circonférence partielle cylindrique (10) et qui délimite un espace libre conjointement avec la bague de palier (13), l'arbre d'équilibrage comprenant un élément de serrage (14) serré dans l'espace libre, qui serre la bague de palier (13) radialement contre la circonférence partielle cylindrique (10).

5. Arbre d'équilibrage selon la revendication 4, **caractérisé en ce que** l'élément de serrage (14) bloque la bague de palier (13) contre un déplacement axial des deux côtés sur le tourillon (8, 9) par le fait que l'élément de serrage (14) est relié axialement par complémentarité de formes aussi bien à l'arbre à balourd (3) qu'à la bague de palier (13).

6. Arbre d'équilibrage selon la revendication 5, **caractérisé en ce que** la liaison axiale par la forme entre l'élément de serrage (14) et l'arbre à balourd (3) est formée par une rainure (26) dans le dos du tourillon (11), dont les parois de rainure bordent axialement des faces frontales axiales de l'élément de serrage (14), soit avec un faible jeu, soit sans jeu_{.}

7. Arbre d'équilibrage selon la revendication 5 ou 6, **caractérisé en ce que** la liaison axiale par la forme entre l'élément de serrage (14) et la bague de palier (13) est formée par le fait que les saillies de la cage (27) bordent axialement les faces frontales axiales de l'élément de serrage (14), soit avec un faible jeu, soit sans jeu.
